# EUROPEAN PATENT APPLICATION

(11) **EP 4 836 220 A1**
(43) Date of publication of application: **04.11.2026**
(21) Application number: 25172978.6
(22) Date of filing: 28.04.2025
(51) Int. Cl.: H02J 3/00

(54) **METHOD AND SYSTEM FOR OPTIMIZED CONGESTION MANAGEMENT AND CONTROLLED IMBALANCES USING FLEXIBILITY IN ELECTRICAL POWER GRIDS**

(71) Applicant: VITO NV, 2400 Mol (BE)
(72) Inventor: SANJAB, Anibal, B-2400 Mol (BE); SANT'ANA MARQUES ARNOUX, Luciana, B-2400 Mol (BE)
(74) Representative: V.O.

(57) **Abstract**

A computer-implemented method and system configured to manage electrical grid congestion in electrical power grids. Flexibility bids are received from multiple flexibility service providers connected to transmission and/or distribution systems in the electrical power grid. Each flexibility bid comprises an offered flexibility quantity and an associated resource allocation value. A mathematical optimization model is defined to select flexibility bids to resolve congestion in the electrical power grid, taking into account the resource allocation values associated with the flexibility bids. Imbalance constraints are incorporated into the mathematical optimization model, where the imbalance constraints are set to maintain the electrical power grid imbalance within a predetermined range taking into account a current system imbalance state and specified minimum and maximum allowable system imbalance values. The mathematical optimization model is solved to obtain an optimal set of flexibility bids to procure, resolving congestion while maintaining the system imbalance within the specified minimum and maximum allowable values. Adjustments are then implemented in the power grid based on the obtained optimal set of flexibility bids.

## Description

### FIELD OF THE INVENTION

The invention relates to the field of electrical power systems and power grid management. More specifically, the invention relates to a computer-implemented method for congestion management in an electrical power grid. The invention also relates to a system for congestion management in an electrical power grid. The invention involves aspects of power system optimization, grid balancing, and managing power flows within transmission and distribution networks. The invention encompasses the utilization of computational models and mathematical optimization techniques in the operational management of power grids. It also relates to handling and processing of flexibility bids/offers from service providers, the use of market clearing engines, and the integration of balancing services.

### BACKGROUND TO THE INVENTION

Electric power systems are configured to transport electricity from generation sources to consumption centers through a network of transmission and distribution lines. Congestion occurs in these networks when the demand for grid capacity exceeds the available physical limits of the infrastructure, such as power lines (transmission lines, distribution lines), and transformers. This situation can result in overloads, increased losses, voltage instability, and, in severe cases, system outages when power flows significantly surpass capacity limits. Moreover, congestion may force operators to curtail generation (for example, from renewable sources) or shed load when the available transmission and distribution capacity between generation-rich and demand-heavy areas is insufficient for real-time operation. Effective congestion management can be important to ensure the reliability and efficiency of power systems.

Traditionally, congestion management involves adjusting the generation and consumption patterns within the grid to alleviate overloads while maintaining system reliability. This process typically includes adjusting the output levels of generators to reduce power flows on congested lines, reducing consumption in certain areas to decrease demand on overloaded infrastructure, and/or procuring additional services that can provide quick adjustments to balance the generation and demand in the system.

Maintaining system balance has traditionally relied on a precise alignment of supply and demand to prevent frequency instability. However, the energy landscape is undergoing significant transformation. On the generation side, the integration of renewable sources, alongside both large-scale and distributed power resources, is reshaping traditional supply patterns. At the consumption level, increasing electrification, evident in industrial processes, data centers, and emerging loads such as those from electric mobility and heating systems, introduces greater volatility and unpredictability. Furthermore, the advent of regional balancing mechanisms adds another layer of complexity to grid operations. Periods of overly abundant generation (due to oversupply from renewables) and periods of increased power demand (due to electrification) are increasing in frequency thus elevating the stress condition on the grid leading to injection-driven and offtake-driven congestions at the different voltage levels of the grid (transmission and distribution). As a result, congestion, once predominantly a transmission-level concern managed with conventional resources, is now also emerging at the distribution level, posing new challenges in maintaining grid reliability without overburdening any particular network segment.

Moreover, the emergence of regional balancing markets has introduced an opportunity for systems to collaborate on imbalance correction over a broader geographic area.

Conventional methodologies fall short in accommodating the diverse range of flexibility bids available from different sources, ranging from large-scale, transmission-connected resources to small-scale, distribution-connected resources. As a result, these traditional approaches struggle to resolve concurrent congestion issues that may occur simultaneously across various grid segments (both transmission and distribution) and over different timescales. Furthermore, the lack of use of distinct technical constraints associated with each type of flexibility bid limits the operator's ability to manage congestion in a cost-effective and resource-efficient manner.

Traditional congestion management strategies typically rely on manual selection or simple merit order lists that focus solely on flexibility price, without adequately considering the diverse impact each flexibility bid has on different grid components and on system imbalances. They typically lack the capability to assess which flexibility bids to (partially) purchase based on their technical attributes and interconnected grid impact, making it challenging to resolve congestion efficiently without triggering additional congestions and/or destabilizing the system imbalance.

In summary, the existing congestion management strategies are constrained by their inability to adapt to the dynamic modern grid environment characterized by distributed resources and regional market interactions. This limitation results in increased operational costs, inefficiencies in resource utilization, and reduced potential for integrating renewable energy sources. There is a pressing need for innovative approaches that offer enhanced flexibility and adaptability, enabling grid operators to optimize system operation while maintaining reliability and compliance with regulatory requirements.

### SUMMARY OF THE INVENTION

It is an object of the invention to provide for a method and a system that obviates at least one of the above-mentioned drawbacks.

Additionally or alternatively, it is an object of the invention to improve congestion management in electrical power systems.

Additionally or alternatively, it is an object of the invention to enhance the flexibility of grid operations in resolving congestion while maintaining system reliability and compliance with operational constraints.

Additionally or alternatively, it is an object of the invention to provide for an improved congestion management in electrical power systems that facilitates integration with regional balancing markets.

Additionally or alternatively, it is an object of the invention to improve the feasibility of congestion management solutions in power systems with high penetration of distributed energy resources.

Thereto, the invention provides for a computer-implemented method for congestion management in an electrical power grid, the method comprising:
receiving flexibility bids/offers from a plurality of flexibility service providers connected to transmission and/or distribution systems in the electrical power grid, each flexibility bid comprising an offered flexibility quantity and an associated resource allocation value; defining a mathematical optimization model to select flexibility bids to resolve congestion in the electrical power grid taking into account resource allocation values associated to the flexibility bids; incorporating imbalance constraints into the mathematical optimization model, wherein the imbalance constraints are set to maintain the electrical power grid imbalance within a predetermined range taking into account a current system imbalance state, wherein the imbalance constraints specify minimum and maximum allowable system imbalance values; solving the mathematical optimization model to obtain an optimal set of flexibility bids to procure to resolve congestion while maintaining the system imbalance within the specified minimum and maximum allowable values; and implementing the adjustments in the power grid based on the obtained optimal set of flexibility bids.

The traditional approaches fail to account for complex scenarios where flexibility is required across multiple grid elements, where different bid types (simple versus complex) and product forms (energy versus capacity, long-term versus short-term versus near real-time) must be traded, where coordinated flexibility procurement between Transmission System Operators (TSOs) and Distribution System Operators (DSOs) is necessary, or where predefined system imbalance limits have to be met. The method of the disclosure enables alleviating congestion but also respect operational constraints, maintains system balance, and enhances overall grid efficiency.

In some examples, the system operator determines a target range for system imbalance to be enforced during congestion management, such that the activation of flexibility does not introduce an undesirable level of imbalance in the electrical power grid. Specifically, the system operator may specify an initial (or "actual") imbalance value, together with minimum and maximum allowable imbalance limits that define a bounded region within which system imbalance must remain. By configuring these imbalance limits, the operator can selectively constrain the flexibility procurement process to either maintain the existing level of imbalance, to simultaneously address imbalances (such as zeroing out net imbalance), or to leave imbalance constraints relatively unconstrained if heightened priority is placed on purely resolving congestion. For instance, setting both the minimum and maximum imbalance limits equal to the actual imbalance prevents any shift in net system imbalance, whereas forcing both limits to zero ensures that the optimization engine seeks to both solve congestion and achieve a net-zero system imbalance within the modeled timeframe. Conversely, relaxing the imbalance constraints by assigning large negative or positive imbalance ranges allows the system to focus primarily on congestion resolution, without a stringent requirement to control net imbalance.

In executing the mathematical optimization model under these operator-defined bounds, the solution process accounts for each flexibility bid's potential impact on grid flows, operational limits, and overall system imbalance. The model thus selects and procures flexibility bids/offers in a manner that satisfies congestion constraints while keeping the final imbalance within the specified minimum and maximum values. This approach inherently prevents the creation of secondary grid disturbances, such as new congestion or excessive imbalance, that would otherwise compromise system reliability. Furthermore, it allows the operator to balance multiple objectives, including adherence to technical bid requirements (e.g., divisibility or exclusivity constraints), conformance with any global caps on resource allocation, the minimization of total cost, etc. By embedding these bounded imbalance constraints, the invention provides a robust mechanism for ensuring that the procurement and dispatch of flexibility for congestion management remains compatible with broader system operational criteria.

Flexibility bids from multiple service providers are effectively integrated into a mathematical optimization model that incorporates system imbalance constraints. Traditional congestion management techniques typically enforce strict balance constraints during real-time operation by requiring that total power generation equals total power consumption.. However, in the congestion management phase, controlled imbalances are allowed, with a subsequent balancing phase ensuring that any temporary deviations are adjusted for real-time operation, thereby expanding the range of feasible solutions for relieving congestion without compromising overall grid stability.

By collecting the flexibility bids, the method leverages a diverse pool of resources across the grid, including distributed energy resources (DERs), to address congestion. A mathematical optimization model is provided that is configured to select the optimal set of flexibility bids that will resolve congestion in the grid. This includes one or multiple transmission grids and multiple distribution grids connected to those transmission grids. The model ensures that congestion resolution is optimized simultaneously across different grid layers, thereby improving overall system efficiency.

This model can incorporate the goal to minimize the total cost of procuring flexibility services while effectively managing congestion, ensuring that power flows on transmission and distribution lines, transformers, and other grid components remain within their physical capacity limits to prevent overloads, and also can introduce system imbalance variables and specifying minimum and maximum allowable system imbalance values. These constraints allow the system imbalance to vary within a predetermined range during congestion management, while ensuring that congestion resolution remains synchronized across interconnected grid layers.

Enforcing a strict balance constraint, maintaining the system's net power imbalance at zero, can significantly restrict the solution space and lead to suboptimal or infeasible outcomes. This is because achieving perfect balance at the congestion management level does not necessarily translate into improved overall system balancing, as balancing is typically addressed regionally where net imbalances in subregions can offset each other. Instead, the disclosed method incorporates imbalance constraints that permit controlled variations in system imbalance. This approach allows the system operator to specify acceptable minimum and maximum imbalance limits based on operational requirements, regulatory guidelines, or regional balancing practices, rather than always enforcing a strict net-zero condition.

In interconnected power systems, it is often acceptable for individual grids to experience foreseen temporary imbalances at stages before real-time operation that can be corrected through regional balancing mechanisms closer to real-time. Allowing controlled imbalance variations provides system operators with greater flexibility to find cost-effective solutions for congestion management without being constrained by the need to maintain perfect balance at all times.

Notwithstanding the benefits of permitting controlled imbalance variations for congestion management at temporal stages before real-time, it will be appreciated that during real-time operation the net imbalance of a defined power system can be maintained at or near zero to prevent deleterious frequency deviations that could, if uncorrected, lead to system instabilities or even a blackout. In embodiments of the present invention, while individual local regions within an interconnected power system may experience transient imbalances, the aggregate imbalance across the full system may be maintained by ensuring that any local deviations ultimately net out prior to real-time operation. Accordingly, when the congestion management market is executed, e.g. ranging from minutes to days before real-time dispatch, the optimization process may allow for controlled deviations from perfect balance. These temporary imbalances are subsequently corrected through regional balancing markets employing a variety of balancing products, including Frequency Containment Reserves (FCR), automatic Frequency Restoration Reserves (aFRR), manual Frequency Restoration Reserves (mFRR), and Replacement Reserves (RR), thereby ensuring overall grid stability while permitting a more flexible and cost-effective congestion management strategy.

The optimization model may for example employ a solver using appropriate computational techniques, such as linear programming or mixed-integer linear programming (MILP). The solution may yield an optimal set of flexibility bids. It can thus be determined which bids are to be procured, and at which proportions, to effectively resolve congestion while minimizing resources. It can be effectively ensured that the resulting adjustments do not cause the system imbalance to exceed the specified minimum and maximum allowable values.

Based on the optimal set of flexibility bids obtained from the optimization model, adjustments can be implemented in the power grid. This may involve directly or indirectly adjusting generation and consumption, for example instructing selected service providers to modify their power generation or consumption according to the procured bids. This may also involve coordinating with grid operations to ensure that the implemented adjustments align with grid operational practices and do not introduce new reliability issues.

In one example, the system operator, acting as the procuring entity for flexibility services, is integrally involved in multiple stages of the process. Prior to procurement, the operator may prequalify flexibility service providers by evaluating whether the offered resources are capable of delivering the intended services, can reliably validate their performance, and conform to the established technical grid requirements. This prequalification may include assessments of historical performance, technical certifications, and compliance with grid operational standards. Moreover, during the run of the flexibility market, the system operator actively participates in the procurement process, providing the needed grid data to allow the solution to ensure that only those bids which satisfy both the optimization criteria and operational reliability considerations are selected. Subsequent to implementation, the operator further oversees validation and settlement procedures to verify that the delivered flexibility conforms to the bid specifications and that any deviations are addressed in accordance with predefined protocols. Thus, by embedding these multi-stage evaluations and controls, the system operator ensures that the procured flexibility services are both technically compliant and operationally effective, thereby maintaining grid reliability and performance.

By allowing controlled system imbalance variations, the method provides more flexibility in resolving congestion. It enables system operators to explore a wider range of feasible solutions, identifying more cost-effective options.

Maintaining the system imbalance within acceptable limits ensures that grid stability is not compromised. The method facilitates efficient utilization of available flexibility resources, including DERs, enhancing overall grid performance. It will be appreciated that other flexibility resources are also envisaged. For instance, compared to DERs, flexibility may also come from larger resources, e.g. generation, consumption, storage, etc.

The approach is compatible with the trend toward regional balancing (e.g. European balancing as indicated by the EU electricity grid balancing guideline) in interconnected power systems. It allows individual grids to tolerate temporary imbalances that can be corrected at a higher system level, providing better integration and cooperation among regional grid operators. The imbalances can be netted and corrected. This can be performed before real-time operation. During real-time operation, it is desired that the system is kept balanced.

By integrating resource allocation values that encompass both the direct resource allocation (e.g. costs) and the effectiveness of flexibility activations in reducing grid flows (for example, recognizing that a 1 MW reduction at one location may only result in a 0.7 MW decrease in flow on a particular line), the method aims to achieve overall resource allocation needed for congestion management. This targeted approach ensures that congestion is alleviated efficiently, avoiding unnecessary activations that could translate into additional resource needs.

Consider a scenario where certain transmission lines in a power grid are experiencing congestion due to high demand in specific areas. Flexibility service providers across the grid can submit their bids offering various quantities of upward and downward flexibility, each with associated parameters.

The operator can formulate an optimization model incorporating the collected bids, power flow constraints, and imbalance constraints with specified limits (e.g., allowing system imbalance to vary between -50 MW and +50 MW). The model is solved to identify the optimal combination of bids that resolves the congestion at the lowest possible associated resource allocation value while keeping the system imbalance within the allowed range.

Selected service providers can adjust their generation or consumption as per the procured bids, relieving congestion on the affected transmission lines, distribution lines, transformers, etc. and/or any other grid line or grid component. Congestion can be alleviated without strictly enforcing system balance, and the system imbalance remains within acceptable limits that can be managed through regional balancing mechanisms.

By relaxing the strict balance constraint and incorporating imbalance constraints with predefined limits, the method expands the set of potential solutions. In scenarios where available flexibility is insufficient to resolve congestion while maintaining perfect balance, the method allows for feasible solutions by tolerating acceptable imbalance levels. Operators can avoid expensive adjustments that would be necessary under strict balance constraints, opting instead for more economical solutions that still meet operational requirements.

In addition, it is recognized that enforcing strict balancing at an individual grid level may lead to redundant corrective actions by disregarding the inherent netting effects achievable between interconnected grid segments. For instance, when one grid experiences a surplus while an adjacent grid incurs a corresponding deficit, the aggregate effect may naturally balance out given sufficient cross-border tie-line capacity. It is understood that rigid grid-level balance constraints can potentially necessitate unnecessary adjustments. By contrast, the controlled relaxation of balance constraints permits a more flexible and economically efficient approach, mitigating the risk of duplicate balancing efforts while still ensuring overall system stability and operational compliance.

By allowing controlled imbalance variations, the method supports broader balancing efforts across interconnected systems.

The method encompasses the evaluation and selection of flexibility bids, which are critical to resolving congestion and maintaining system balance within the electrical power grid. The process starts with the receipt of flexibility bids from multiple service providers, which are then processed through a mathematical optimization model to determine the optimal set of bids to procure. The method determines which flexibility bids to accept and in what proportions these bids should be utilized to efficiently manage congestion. It will be appreciated that the actual implementation of these decisions, namely, the activation of the selected flexibility bids, can be carried out externally by the system operator. Once the optimal set of flexibility bids has been identified by the method of the disclosure, a signal can be sent from the system operator to the flexibility providers indicating which bids have been accepted and the specific proportions in which they are to be activated. Such an exemplary separation of decision-making and actual bid activation may provide advantages since the responsibility for the actual activation of these resources, which may involve further operational decisions and physical adjustments within the power grid, can reside with the system operator.

The decision-making process can be improved by providing a systematic approach to evaluate and select flexibility bids, which is critical for maintaining the reliability and efficiency of the electrical power grid. By delineating the roles and responsibilities, it can be ensured the system operator can effectively act on the optimized recommendations, thereby streamlining the congestion management process and enhancing overall grid stability.

Optionally, the flexibility bids comprise upward flexibility bids and downward flexibility bids; wherein the upward flexibility bids indicate a commitment to increase electrical power generation or to decrease electrical power consumption; and wherein the downward flexibility bids indicate a commitment to decrease electrical power generation or to increase electrical power consumption.

Upward flexibility bids are commitments made by flexibility service providers to either increase their power generation or decrease their power consumption. The goal is to supply more power to the grid or reduce demand, effectively increasing the net power injection into the grid at certain connection points. The grid connection location can be taken into account for congestion management. Downward flexibility bids are commitments to either decrease power generation or increase power consumption. The aim is to reduce the power being supplied to the grid or to consume more power, effectively decreasing the net power injection into the grid at certain connection points. By classifying bids into upward and downward categories, operators can precisely target the areas of the grid that require specific adjustments.

Flexibility providers control the net power injections and withdrawals at various nodes, enabling them to fine-tune their contributions to grid performance. In this method, these providers submit bids offering to adjust their power injection or offtake if compensated accordingly. The method ensures that flexibility resources are activated precisely where they are most needed, avoiding unnecessary adjustments in other parts of the grid. By aligning bid selection with the grid's specific requirements, the system operator can minimize the total cost associated with procuring flexibility services, and, upon accepting a bid, instructs the corresponding flexibility provider to implement the specified power adjustments.

The grid can dynamically respond to fluctuations in supply and demand by activating appropriate bids in a controlled manner that maintains the system imbalance within predetermined minimum and maximum limits. In this approach, the computer-implemented method of the disclosure enables adjustment of the system imbalance by ensuring it remains within a defined range; if the minimum and maximum limits are set equal to zero, the grid is maintained in a perfectly balanced state. Proper balancing prevents frequency deviations and maintains voltage levels within acceptable ranges, preserving system integrity.

Upward and downward bids are modeled in the optimization as decision variables that represent the quantity procured from each bid. For instance, a fully divisible bid includes a price and a maximum purchasable quantity, and the decision variable specifies the actual quantity selected within this range, subject to the bid's technical constraints. Similarly, other bid formats are handled by decision variables that capture the procured amounts in accordance with their respective technical limits. The model includes constraints that represent the physical and operational limits of the grid, ensuring that any adjustments stay within safe boundaries. The optimization then seeks to minimize the total resource allocation while resolving congestion and maintaining system balance within specified limits.

Operators can address congestion by either reducing the load (through upward bids) or reducing the supply (through downward bids) in specific grid areas. This may also involve simultaneous activations of upward and downward flexibility bids at different areas of the grid. By considering the impact of bid activation on the entire grid, the method prevents the creation of new congestion instances/points while resolving existing ones. The method can ensure that adjustments do not push the system imbalance outside allowable limits, preserving overall grid stability.

In some examples, the congestion management process is configured to not only resolve existing congestion issues but also to ensure that remedial actions do not inadvertently precipitate new congestion events. In certain implementations, corrective actions are executed by selectively activating flexibility bids to alleviate overloads in congested grid components, while preventive measures are simultaneously applied to evaluate the (complete) impact of these adjustments on power flows throughout the network. This evaluation may incorporate simulations and constraint checks to verify that any remedial adjustments remain within the established operational limits of all grid components. By integrating both corrective and preventive actions into a unified congestion management strategy, the method ensures that the resolution of current congestion does not compromise the overall stability and reliability of the electrical power grid.

Optionally, the method includes, after determining the solution to the mathematical optimization model and identifying the optimal subset of flexibility bids for acquisition, forwarding any residual flexibility bids not procured to a secondary balancing platform for utilization in providing balancing services; wherein said forwarding comprises the step of applying a filtering process to the residual flexibility bids, the filtering process is configured to ensure that activation of said bids does not precipitate further congestion within the electrical power grid network to which the flexibility resources are connected.

After the primary congestion management process, there often remain flexibility bids that were not procured because they were not necessary for resolving congestion or were not cost-optimal within the constraints of the optimization model. These residual flexibility bids represent untapped resources that can be valuable for other grid services, particularly balancing operations. To prevent the wastage of these available flexibility resources, the residual flexibility bids can be forwarded to a secondary balancing platform, such as regional or national balancing markets. This platform is responsible for maintaining the overall balance between generation and consumption in the power system, thereby ensuring system frequency stability.

In accordance with an example of the invention, each flexibility bid is optionally provided with a service tag by the respective flexibility provider to indicate the intended usage of the bid. Specifically, the service tag may assume one of three values: "CM," "CM+B," or "B." Bids marked "CM" are designated solely for congestion management and, accordingly, any unprocured residual portions of such bids are not eligible for forwarding to a secondary balancing platform. Bids marked "CM+B" are first considered for congestion management, and any residual flexibility, resulting from either non-selection or partial selection during the congestion management process, is subsequently identified and may be forwarded for balancing purposes. Conversely, bids marked "B" are excluded from the congestion management process altogether and are directly considered to be forwarded to the balancing platform. This tagging mechanism ensures that only those flexibility bids explicitly authorized by the provider for use in balancing operations are forwarded, thereby respecting the provider's operational preferences and preventing the unintended transmission of bids reserved exclusively for congestion management.

Directly forwarding all residual flexibility bids without assessment can inadvertently introduce new congestion or operational challenges if these bids are activated by the balancing platform. To mitigate this risk, the method incorporates a filtering process before forwarding the bids.

In some examples, the filtering process may involve two components, namely a market compatibility check and a grid feasibility check.

In the market compatibility check, the residual flexibility bids may be adjusted to comply with the operational requirements and participation criteria of the balancing platform. This may involve modifying the bid quantities to meet minimum size thresholds and ensuring that bid quantity increments align with the granularity specifications of the balancing market. For example, if the balancing market may require a minimum bid size of 1 MW and increments of 0.1 MW, a residual bid of 1.15 MW would be adjusted to 1.1 MW or combined with other bids to meet the quantity granularity requirement. A bid of 0.8 MW, will be filtered out or combined with other bids to meet the minimum quantity requirement.

In the grid feasibility check, an assessment may be performed to determine whether the activation of each residual bid would remain within the operational limits of the electrical power grid. This may involve simulating the activation of the flexibility bids and analyzing their effects on power flows, line capacities, voltage levels, and other important grid parameters.

Hence, even if certain bids are not needed for congestion management, they can contribute to balancing services, avoiding wastage. The filtering process safeguards the grid from potential issues that can arise from activating residual bids. By ensuring that only grid-feasible bids are forwarded, the method avoids causing new congestion or operational problems.

By adapting the residual bids for the balancing platform, the method promotes greater participation of distributed resources in regional balancing markets. This supports the broader goal of interconnected and cooperative grid operations.

By providing additional resources for balancing, the method helps maintain system frequency within acceptable limits while still safeguarding the grid to which the flexibility resources are connected. This can be important for the stability and safe operation of the entire power system.

Optionally, the filtering of the flexibility bids comprises: performing an electrical grid feasibility check to determine whether activation of forwarded residual flexibility bids would be within operational limits of the electrical power grid to which the flexibility resources are connected; and adjusting the flexibility bids by pruning bid quantities that would cause congestion, or by deleting bids whose activation would precipitate further congestion.

The filtering process can be important for maintaining grid stability and operational integrity when unused flexibility bids are forwarded to secondary balancing platforms. This process ensures that only those bids which can be safely activated without causing further congestion are considered for balancing services.

For instance, if the activation of a bid is found to cause or exacerbate congestion or violate other grid constraints, the bid may be either deleted, i.e. excluded entirely from being forwarded if it cannot be adjusted to a safe level, or pruned, i.e. the bid quantity is reduced to a level that is safe for the grid. This can effectively ensure that only bids whose activation would not compromise grid stability are forwarded to the balancing platform.

The filtering process may involve performing an electrical grid feasibility check on the residual flexibility bids that were not procured during the initial congestion management optimization. The purpose of this grid feasibility check is to assess whether the activation of each unused bid would be within the operational limits of the electrical power grid. This may involve performing a power flow simulation, wherein for each residual bid, the method simulates its activation by calculating the potential changes in power flows across the grid components (transmission and distribution lines, transformers, etc.). The simulated power flows may then be compared against the physical and operational limits of the grid components. These limits may include maximum allowable line capacities, thermal limits, voltage levels, and stability margins. By performing this processing step, the method can identify any bids whose activation would result in violations of grid constraints, such as overloading an electric line or causing unacceptable voltage deviations.

Based on the results of the electrical grid feasibility check, the method may proceed to adjust the flexibility bids to ensure they can be safely integrated into the grid. This adjustment may involve pruning bid quantities or limiting the bid quantities to predefined ranges that are deemed grid safe based on the grid feasibility check step. For example, if a bid's full activation would cause congestion, the method can reduce the bid quantity to a level that can be safely activated without violating grid constraints. For example, if a bid offers 10 MW of downward flexibility but only 7 MW can be accommodated without causing congestion, the bid is pruned to 7 MW.

In an example where a bid is characterized by a constrained operational envelope, such as when only bid activations between 2 MW and 7 MW are acceptable, the method may further incorporate an operational engine (OE) method to compute and enforce these range limits. In such cases, even if the initial bid quantity exceeds the upper limit or falls below the lower threshold, the bid can be automatically adjusted to conform strictly to the defined range prior to its forwarding to the balancing market step. This adjustment may involve pruning or scaling the bid quantity such that any activation falls within the 2 MW to 7 MW interval (for example by forwarding the bid as a partially divisible bid with a 2 MW minimum acceptance level and 7 MW maximum quantity limit), ensuring that the bid not only satisfies grid feasibility constraints but also complies with market-specific participation criteria. Integration of the OE process in the method of the disclosure allows for seamless and automated enforcement of these operational bounds, further enhancing system safety and operational integrity.

In cases where any activation of a bid would precipitate further congestion (i.e., even minimal activation would violate grid constraints), the method may involve removing the bid from consideration for bid forwarding. This can ensure that only bids which are safe under all potential activation scenarios are forwarded.

The filtering process can prevent overloads on grid components by proactively assessing and adjusting bids. In this way, the risk of equipment damage can be reduced and the system reliability can be better maintained.

Adjusting rather than outright rejecting bids maximizes the utilization of available flexibility resources, contributing to overall grid efficiency.

In one embodiment, the method further comprises determining an operating envelope for each submitted flexibility bid based on its location and associated grid parameters, wherein the operating envelope defines a safe range for bid activation. In this approach, a subsidiary optimization problem is employed to calculate the safe operating range, and if the offered bid quantity exceeds this range, the bid is pruned to the safe range prior to forwarding.

Alternatively, rather than applying pruning on an individual basis, the method may aggregate multiple bids such that their combined quantity adheres to the grid safety criteria.

In either case, the bid adjustment step can ensure that only bid quantities which are verified to be grid-safe are forwarded, enhancing overall resource utilization while maintaining operational integrity.

In some examples, the method includes evaluating and filtering flexibility bids to ensure that only safe and feasible bids are forwarded for further processing. One approach involves reviewing each bid individually and removing bids that are deemed unsafe for activation based on predefined operational constraints. This process may involve a direct elimination of unsafe bids. Additionally, in some examples, an alternative approach utilizing operating envelopes can be employed. In this alternative approach, a dedicated optimization process is used to determine safe bid quantity ranges based on a bid's location in the electrical grid. These operating envelopes define the maximum flexibility that can be safely activated without violating grid constraints. This process may involve solving a separate optimization problem to derive the operating envelopes, after which bids are pruned accordingly to fit within their respective safe activation ranges. This ensures that only bids conforming to grid safety requirements are considered for congestion management or forwarded to balancing platforms.

By ensuring that forwarded bids will not cause local grid issues if activated, the method facilitates seamless integration with secondary balancing platforms. This integration supports regional coordination and helps in balancing supply and demand on a wider scale without adversely affecting local grid conditions.

In some examples, the filtering procedure for forwarding any residual flexibility bids is carried out in two steps. First, a market compatibility check (e.g. "MARI_check") is performed to ensure that each candidate bid meets the technical participation requirements of the designated balancing platform (for example, the MARI platform, including minimum bid size and incremental granularity constraints. During this step, the bid may be adjusted, for instance by reducing the offered quantity to the nearest acceptable increment or discarding those bids that cannot feasibly comply with platform specifications. Subsequently, a grid feasibility check (e.g. "grid_check") is carried out to validate that activation of the forwarded bids would not precipitate or exacerbate grid congestion. In some initial implementations, if activation of a given bid were found to cause or worsen congestion, that bid would be removed in its entirety rather than partially pruned. This conservative approach minimizes the risk of unintended grid constraints violations; however, in more advanced versions, partial pruning or similar refinement techniques could be employed to salvage portions of a bid without jeopardizing system safety or efficiency.

It is to be appreciated that while the foregoing embodiment illustrates the filtering procedure using a market compatibility check for the designated balancing platform, the invention is not so limited. In alternative embodiments, residual flexibility bids may be forwarded to other balancing platforms having distinct technical and operational requirements. In such cases, the market compatibility check would be suitably adjusted to reflect the specific participation criteria of the destination platform, including modifications to parameters such as minimum bid size, bid incremental granularity, and other platform-specific thresholds. This adaptable approach ensures that the method can be seamlessly integrated with a variety of balancing platforms, thereby broadening the applicability of the invention across different market configurations and operational environments.

In some embodiments, following the grid feasibility check (e.g. grid_check), the processing step further comprises modifying the classification of the flexibility bids based on the results of the congestion management market clearing. For example, if a multipart bid is cleared in the congestion management market, any associated child bids are reclassified as simple bids in accordance with their inherent bid types rather than being maintained as components of a multipart bid structure. Similarly, when a partially divisible bid is cleared, thereby satisfying its minimum quantity clearing requirement, it can be reclassified and forwarded as a fully divisible bid, allowing for continuous adjustability up to its maximum offered quantity. These reclassifications optimize the utilization of residual bids by ensuring that they are transmitted in a format best suited for the secondary balancing platform, enhancing operational efficiency while preserving compliance with both market compatibility and grid feasibility requirements.

Optionally, the filtering of the flexibility bids comprises adjusting unused flexibility bids to meet minimum size and granularity requirements of the secondary balancing platform.

After resolving congestion through the procurement of selected flexibility bids, there may remain unused flexibility bids from various flexibility service providers. These residual bids represent available resources that can be beneficially utilized in secondary balancing platforms (e.g., regional or national balancing markets) to contribute to system-wide balance and stability. However, secondary balancing platforms often have specific operational protocols, including minimum bid sizes and granularity requirements. For example, the platform may require that bids can be for a minimum of 1 MW. In some examples, bids may need to be in increments of 0.1 MW or 1 MW, prohibiting fractional bids that do not align with this granularity. If the unused flexibility bids do not meet these requirements, they cannot directly participate in the secondary balancing market. Simply forwarding them as-is can result in rejection or operational inefficiencies.

To address this challenge, the method incorporates a process to adjust the unused flexibility bids to align with the secondary balancing platform's requirements. The offered flexibility quantities of unused bids may be determined. The increments in which the flexibility can be adjusted can be identified. Bids exceeding allowable maximums may be pruned to fit within acceptable limits. Bid quantities may be modified (e.g. rounded down) to the nearest acceptable increment as per the platform's granularity requirements. Before forwarding adjusted bids, simulations or analyses may be performed to ensure that, if activated, these bids will not introduce new congestion or operational issues in the local grid. It can be verified that the adjusted bids do not violate any technical or safety constraints within the grid infrastructure. By adjusting bids to meet the secondary platform's requirements, the method can ensure that these bids are readily accepted for consideration and can be seamlessly integrated into the balancing market operations.

In some examples, to ensure the effective filtering of flexibility bids before forwarding them to a secondary balancing platform, the present method may implement a market compatibility check procedure that evaluates bid suitability based on bid type and associated divisibility characteristics. The market compatibility check may considers whether a bid is fully divisible, fully indivisible, or partially divisible and applies a corresponding set of rules to determine eligibility for forwarding. Fully divisible bids can be assessed based on their remaining quantity (RQ), with only those meeting the minimum bid size and granularity requirements being forwarded. Fully indivisible bids can be evaluated based on whether they were cleared in the initial market process, and if not, their integer quantity compliance can be verified before potential forwarding. Partially divisible bids undergo additional validation steps depending on whether or not they have been cleared in the congestion management market. If they have been cleared, their RQ is processes like fully divisible bids. If the bid has not been cleared in the congestion management market, the floor and ceiling of, respectively, their maximum and minimum quantity requirements are computed depending on the granularity requirements of the market (maximum quantity is rounded down to the nearest granularity requirement and minimum quantity rounded up to the nearest granularity requirement or minimum bid size requirement whichever applies). If the ceiling still exceeds the floor, the bid can be forwarded, now with the computed ceiling and floor as, respectively, the maximum and minimum bid quantity requirements. Through this structured evaluation according to this example, a systematic and automated methodology for bid filtering can be provided, ensuring that forwarded bids meet the technical constraints necessary for integration into regional balancing markets while preventing activation of bids that may introduce operational inconsistencies and/or new congestion within the grid.

Adjusting and forwarding unused flexibility bids allows for the full utilization of available resources, preventing wastage of potential services that can aid in system balancing. The adjusted bids contribute to the overall balancing efforts of the electrical grid, helping to correct system imbalances and maintain frequency stability. By ensuring that only grid-compliant bids are forwarded, the method avoids the risk of new congestion or operational problems that can arise from activating incompatible bids.

The adjustment can make market operations more efficient and reduce the potential for errors.

Furthermore, implementing automated algorithms to adjust bids can enhance speed and accuracy, ensuring that the integration into the secondary platform is timely and reliable.

In some examples, the filtering process is further extended to include a bid type verification step wherein the type and associated relational conditions of each bid are evaluated prior to adjustment and forwarding. For example, when the received flexibility bids comprise an exclusive set, wherein only one bid may be cleared for congestion management, the clearance of a single bid precludes the forwarding of any remaining bids within that set. Similarly, for multipart bids that include a parent bid and one or more child bids, if the parent bid is cleared for congestion management (even if partially purchased), the associated child bids are subsequently reformatted and forwarded as simple bids to the secondary balancing platform, following successful completion of the requisite market compatibility check and grid feasibility check. In addition, partially divisible bids, upon clearance in the congestion management stage, may be treated and forwarded as fully divisible bids in compliance with the minimum size and granularity requirements of the secondary balancing platform. These enhancements ensure that the filtering process not only adjusts bid quantities to meet platform specifications but also rigorously enforces bid-type specific conditions, preventing the inadvertent forwarding of bids that could violate operational or relational constraints.

Optionally, the method includes assessing whether a mathematical optimization model is infeasible due to one or more congestion constraints; upon determining the infeasibility of the mathematical optimization model due to said congestion constraints, implementing a relaxation technique on the congestion constraints to minimize congestion while permitting deviations within predefined ranges (cf. generating the best possible solution, or minimizing congestion as much as possible given the available flexibility resources and problem constraints), wherein the relaxation technique includes: adjusting the mathematical optimization model to minimize congestion in the system modeled by the mathematical optimization model while accommodating the allowed deviations.

In some examples, slack variables are introduced into the congestion constraints (power flow constraints) to allow minimized deviations from the strict limits. These variables represent for example the amount by which the actual power flow can exceed the physical limit of a line or transformer. The power flow constraints are adjusted to include the slack variables. The objective function can be modified to penalize the slack variables heavily, thus discouraging (i.e. minimizing) deviations but allowing them only when necessary to find a feasible solution. This can be achieved by adding penalty terms involving the slack variables multiplied by a relatively large penalty factor in the objective function.

With the relaxation implemented, the optimization model may be resolved. The model may seek to minimize both the total cost and the slack variable values, effectively minimizing congestion severity while accommodating the stringent constraints applied. By allowing limited deviations from strict constraints, the method ensures that the best possible feasible solution can be found even when the original problem is infeasible.

The extent of congestion can be reduced as much as possible, rather than failing to provide any solution. Scenarios where the system operator cannot implement any congestion management actions due to infeasibility can be prevented, thus supporting continuous and reliable grid operations. This approach is suitable for large-scale power systems with complex grids and numerous flexibility service providers.

The mathematical optimization model described herein may become infeasible under various circumstances, such as when the total resource allocation limit is insufficient, when the set of submitted flexibility bids is inadequate to fully resolve all congestion issues, or when the imbalance requirements imposed are excessively restrictive. In such scenarios, the system attempts to identify and select flexibility bids that resolve as much congestion as possible, subject to the constraint that the system imbalance must be maintained within a predetermined allowable range and also abiding by the total cost cap when applicable (the total cost cap is an optional parameter/constraint which can be specified by the system operator). If no combination of flexibility bids can maintain the system imbalance within this specified range, then no solution is provided at all. By contrast, the imbalance limits themselves are not subject to relaxation. Instead, in accordance with certain embodiments, the relaxation technique is applied exclusively to the congestion constraints, permitting one or more transmission or distribution lines (including interface components between transmission and distribution networks) to exceed their predefined capacity limits. During this relaxation process, the mathematical optimization model adjusts the procurement of flexibility bids to minimize the total amount of congestion while allowing a minimized degree of overflow on selected lines. This mechanism ensures that, even in instances where full compliance with all congestion constraints is not feasible, a partial resolution that minimizes the severity of congestion can still be achieved.

Optionally, the mathematical optimization model incorporates flexibility bids that are classified into at least one of the following categories: fully divisible, indivisible, and partially divisible bids, and wherein the optimization selectively procures portions of these bids based on their divisibility characteristics.

By incorporating these classifications into the mathematical optimization model, the method selectively procures portions of the bids based on their divisibility characteristics, thereby ensuring that the clearing behavior aligns with the bid types and their associated technical constraints, thus abiding by the flexibility offering restrictions by the flexibility service providers.. Fully divisible bids are bids where the flexibility service provider is willing to supply any quantity of flexibility up to the maximum offered amount. The grid operator can procure any fraction of the bid quantity, from zero up to the maximum, making these bids highly adaptable to the precise needs of congestion management. In the optimization model, the decision variables representing these bids are continuous and can take any value within a defined range.

This approach allows more flexibility resources to participate by accommodating different bid types, which enables service providers to offer flexibility while complying with their respective technical constraints. Although the classification of bids is a market design aspect, the optimization model specifically accounts for these different bid types, ensuring that the procurement process respects their inherent limitations and capabilities. Consequently, the model selectively procures portions of divisible bids, fully accepts indivisible bids only when feasible, and adheres to predefined thresholds for partially divisible bids. By doing so, the method effectively integrates diverse flexibility resources into the congestion management process while maintaining operational feasibility and grid stability.

Indivisible bids are all-or-nothing offers where the flexibility service provider may require that the full bid quantity be accepted or none at all. This can be due to operational constraints or economic considerations where partial activation is not feasible or cost-effective for the provider. In the mathematical optimization model, these bids may be represented using binary decision variables, where a value of 1 indicates full acceptance of the bid, and 0 indicates no acceptance. The model includes logical constraints to enforce this behavior, ensuring that if the bid is procured, it is procured in its entirety.

Partially divisible bids allow procurement within a specific range, defined by a minimum and maximum quantity. The flexibility service provider specifies a minimum threshold below which it is not willing to provide flexibility, for example possibly due to startup costs or minimum operational levels. The grid operator can procure any quantity within this range. In the optimization model, these bids are represented with decision variables constrained within the specified limits, incorporating both the provider's minimum requirement and maximum capacity. The grid operator may procure any quantity within this range. In the optimization model, these bids may be represented using a binary decision variable that indicates whether the bid is cleared (1 if cleared, 0 if not) and a continuous decision variable that specifies the cleared quantity. If the bid is cleared (binary variable = 1), the continuous variable is constrained to lie within the specified [min, max] range; if not cleared (binary variable = 0), the cleared quantity is 0.

By incorporating the above classifications, the mathematical optimization model can make informed decisions on which bids to accept and in what quantities, aligning with the operational preferences and constraints of the flexibility service providers. The model may include constraints and variables that accurately represent the procurement possibilities.

By accommodating different bid types, the method ensures that all available flexibility resources can be effectively utilized. Fully divisible bids allow for fine-tuned adjustments, indivisible bids enable the inclusion of larger, inflexible resources, and partially divisible bids reflect possible technical and/or other constrains that service providers may be subjected to, so that they can use such bids to translate their preferences when bidding in the market. The ability to accept partial quantities where feasible adds a level of flexibility to the congestion management process, which allows the grid operator to precisely match the required adjustments to alleviate congestion without over-procuring resources.

By considering the divisibility characteristics specified by service providers, the method respects the operational limitations and economic considerations of participants. This leads to increased participation in flexibility markets as providers can offer services aligned with their capabilities.

Incorporating bid divisibility into the optimization enhances the feasibility of finding a solution to the congestion management problem. It reduces the likelihood of infeasibility due to rigid bid acceptance conditions, as the model can adjust procurement quantities within the allowed ranges.

The method enables a more customized approach to congestion management. By selectively procuring bids based on their divisibility characteristics, the grid operator can develop congestion relief strategies that are specifically tailored to the current system conditions and congestion patterns.

Optionally, the collected flexibility bids include service tags that distinguish bids intended solely for congestion management from those intended for balancing or both congestion management and balancing, and wherein the mathematical optimization model is configured to select bids based on said service tags.

The service tag may be a label indicating the intended use of the bid, distinguishing whether the bid is for congestion management, i.e. bids intended specifically for congestion management (i.e., if they are not cleared, the residual quantities will not be forwarded to the subsequent balancing platform), balancing, i.e. bids intended solely for balancing the system's supply and demand (which means they will not be considered when performing market clearing for congestion management, and they will only be considered in the bid forwarding process to the balancing platform), or both congestion management and balancing, i.e. they will first be used in the congestion management process, and then any residual bid will go e.g. through the bid forwarding process (including the market compatibility check and grid feasibility check) to be potentially forwarded to a subsequent balancing platform. The method may involve configuring the mathematical optimization model to select and procure flexibility bids based on their service tags. When focusing on congestion management, the optimization model will, then, only consider bids tagged as "congestion management" or "congestion management + balancing." Bids tagged solely as balancing may be excluded from the congestion management optimization process, and they may for instance be instead forwarded to the secondary balancing platform for balancing services.

By filtering bids based on their service tags, the optimization model can efficiently classify flexibility bids according to the service providers' stated preferences, whether the bid is intended for congestion management, balancing, or both. In this context, the tags serve solely as labels for bid routing: bids designated for congestion management are processed by the congestion management optimization, while those intended for balancing are forwarded to the balancing platform. Importantly, the enforcement of system imbalance, defined by the minimum and maximum limits set by the system operator, remains independent of these tags. The tags do not influence the imbalance constraints or the inherent balancing of supply and demand; they merely assist in directing bids to the appropriate operational process.

The procurement process can contribute to the overall reliability and stability of the grid. By ensuring that each flexibility bid is used appropriately, the method enhances the effectiveness of grid services and maintains the integrity of grid operations.

The optimization model can benefit from a reduced and more relevant set of bids to consider, enhancing computational efficiency and improving solution times. Since the model only needs to process bids applicable to the service being addressed (e.g., congestion management), it can arrive at optimal solutions more rapidly.

Optionally, the mathematical optimization model is adapted to handle relational bids including multipart bids where purchasing a child bid is contingent upon the procurement of its corresponding parent bid, and exclusive set bids where only one bid from a set can be procured.

By accommodating these improved bidding strategies within the optimization model, the method enhances the procurement process's efficiency and technical robustness.

Multipart bids are a group of individual bids (of any type, i.e., fully divisible, indivisible, or partially divisible) for the same market time interval and of the same sense (upward or downward), and each has its own specified resource allocation value (cf. price) and quantity.

Multipart bids may have a parent bid and one or more child bids submitted by a flexibility service provider. The procurement of a child bid is contingent upon full or partial acceptance of its parent bid. This structure allows providers to offer additional services that are only viable when the primary service is utilized while allowing the service provider to offer these additional services at a different price to reflect varying costs as compared the delivery of the original service. Multipart bids can also improve market efficiency as it allows flexibility service providers to submit bids that more closely reflect their costs and technical flexibility capabilities.

The multipart bids can better reflect technical constraints and the cost structure of flexibility service providers (based on the flexible assets they operate in their portfolios). The cost structure can reflect fixed/start up costs and variable costs Furthermore, flexibility service providers can aggregate multiple resources to provide flexibility, so having a multipart bid structure allows adding flexibility form incremental resources.

For example, a flexibility service provider with generation capacity may offer a parent bid to increase generation by 5 MWh at 10 EUR/MWh, and child bids to provide additional increments of 2 MWh and 3 MWh, respectively, each at a price of 15 EUR/MWh. The child bids represent additional capacities that can only be activated if the initial 5 MWh increase is accepted (reflecting, e.g., technical ramp-up requirements or other operational considerations) as well as the increasing allocation values of providing the additional services.

In one example, the disclosed system implements multipart bids by associating a single parent bid with a plurality of child bids, wherein clearance of the parent bid permits the independent clearance of any or all associated child bids, which are maintained at an equivalent hierarchical level without a predetermined sequential order. In alternative embodiments, however, the structure may be readily adapted to impose a sequential clearance order on the child bids, wherein child bids are arranged in a sequence, for example, in order of increasing price for upward flexibility or decreasing price for downward flexibility, to reflect progressive technical or cost-related escalation. Such modifications are contemplated within the scope of the invention and may be applied in embodiments.

In order to incorporate multipart bids, the method can introduce binary decision variables. Binary variable for the parent bid (1 if accepted, 0 otherwise), and binary variable for the child bid may be used. Conditional constraints may be utilized to ensure that a child bid can only be accepted if the parent bid is at least partially accepted.

This constraint enforces that a child bid is accepted only when the parent bid is at least partially accepted. Both parent and child bids can be integrated into the objective function, considering their costs and impact on congestion management.

Advantageously, the grid operator is enabled to use additional flexibility resources when beneficial. It can accurately respect the conditions set by providers, providing a more accurate representation of their capabilities.

Exclusive set bids are groups of fully indivisible bids, each having their own specified price and quantity, where only one bid from the set can be accepted. It reflects situations where a provider offers multiple mutually exclusive options due to resource constraints or preferences. An energy storage system may offer for example:
- Bid A: Upward flexibility non-divisible bid to discharge 10 MWh over the next hour at a requested price of 15 EUR/MWh.
- Bid B: Downward flexibility non-divisible bid to charge 5 MWh over the next hour at a specified price of 25 EUR/MWh (offer to pay).
- Bid C: Upward flexibility non-divisible bid to discharge 15 MWh over the next hour at a requested price of 20 EUR/MWh.

Due to technical limits, the storage system can only either charge or discharge. In addition, to capture opportunity costs, the storage system may include different charging options of exceeding magnitude but at a different requested bulk price.

To handle exclusive set bids, the method may incorporate binary decision variables. For example, a binary variable may be provided for each bid in the exclusive set, while limiting the summation of the binary variables of the different bids within the exclusive set to a maximum of one, reflecting that only one of the bids can be accepted.

An exclusivity constraint may be employed to ensure that at most one bid in the set is accepted.

The optimization model may evaluate all bids in the exclusive set and selects the one that best fits the congestion management objectives and constraints. The simultaneous acceptance of bids that cannot be jointly executed can be prevented, ensuring feasible operations. Further, the model is allowed to choose the most beneficial bid from a set of options, improving overall efficiency.

In some examples, the method's optimization model is formulated as a mixed-integer linear programming (MILP) problem, incorporating an objective function, constraints and decision variables.

In examples wherein the flexibility bids include non-divisible bids, partially divisible bids, multipart bids, or exclusive sets, the MILP formulation remains applicable and can be employed to capture the discrete decision-making inherent in such bid structures. In these cases, binary and/or integer decision variables are introduced to enforce that non-divisible bids are either fully accepted or rejected, to regulate the conditional acceptance of multipart bids, and to restrict the acceptance within exclusive bid sets. This approach not only streamlines the optimization process by providing a consistent mathematical structure across diverse bid types but also enhances the robustness and computational efficiency of the congestion management method.

The objective function may be to minimize the total cost of procuring flexibility bids while resolving congestion and maintaining system imbalance within specified limits.

Different types of constraints may be used. Power flow constraints ensure that power flows remain within the physical limits of the grid components.

Imbalance constraints maintain the system imbalance within predetermined minimum and maximum values. In some examples, a constraint can be imposed to limit the total cost below a predefined cost cap.

Relational bid constraints may include the conditional relationships of multipart and exclusive set bids as detailed above in the exemplary embodiments.

Also various decision variables may be employed. For instance, continuous variables can represent the quantities of divisible and partially divisible bids accepted. Binary variables can represent the acceptance of indivisible bids and handle relational conditions.

In some examples, a divisibility handling procedure is employed. The model may differentiate between fully divisible, indivisible, and partially divisible bids, applying appropriate constraints for each.

In some examples, service tags are employed. The bids may include tags indicating whether they are for congestion management, balancing, or both, aiding in the selection process.

Advantageously, an improve flexibility can be obtained. Complex bidding strategies can be accommodated, mirroring the operational realities of service providers. It allows providers to offer services in a way that aligns with their capabilities and constraints. The selection of flexibility bids can be optimized, considering both technical feasibility and required resource allocation (cf. cost). Furthermore, the ability to resolve congestion effectively can be improved while maintaining grid stability.

It can be effectively better ensured that all providers' bids are evaluated under the conditions they specify. It encourages broader participation by respecting the interconnected nature of services offered and the technical requirements of the portfolio of assets operated by the flexibility service provider. Also, it prevents the acceptance of bid combinations that can lead to operational conflicts or infeasibility. The overall reliability and safety of the power grid can be enhanced.

Optionally, the mathematical optimization model includes at least: power flow constraints that ensure power flows over grid components including interface components between power grids remain within their physical capacity limits; imbalance variables representing the system imbalance in net power injection; and imbalance constraints that limit the system imbalance to within specified minimum and maximum allowable values.

Power flow constraints are mathematical expressions that ensure the power transmitted through each component of the grid, such as transmission lines, distribution lines, transformers, and interfacing components, does not exceed its physical capacity limits. The optimization model includes equations representing these constraints, typically based on i.a. the line limits (thermal limits), voltage limits, and stability considerations of the grid components. By enforcing these constraints, the model prevents scenarios where any grid component is overloaded, which can lead to equipment failure, outages, or even widespread blackouts.

It will be appreciated that the term "physical capacity limits" as employed herein may be understood to encompass the thermal ratings of grid components, such that the thermal limits of transmission and distribution lines inherently represent their maximum current-carrying capacity. In certain implementations, the capacity constraints applicable to transformers and interface components may be defined not solely by their physical or thermal ratings but may instead reflect contractual power transfer limitations, often referred to as subscription levels, which specify, for example, the maximum power that a distribution system operator is authorized to withdraw from a transmission grid.

Imbalance variables quantify the difference between the total power generated and the total power consumed within the grid. This net power injection imbalance can be important for maintaining system frequency and overall grid stability.

The model introduces variables that represent allowable changes in system imbalance. These variables are bounded by specified minimum and maximum limits for instance provided by the grid operator. Allowing the imbalance to vary within acceptable limits provides the flexibility to find optimal solutions for congestion management without strictly enforcing a zero-imbalance condition, which can be overly restrictive.

The power flow constraints act as safeguards, ensuring that no component is subjected to power flows beyond its safe operating limits and optionally further limits such as contractual limits. The model can adapt to changing grid conditions, such as varying demand patterns or unexpected generation outages, by recalculating optimal power flows that respect all operational limits.

In some examples, the calculation of power flows is performed by first establishing a base power flow derived from input data corresponding to the current operating state of the grid. Thereafter, the method computes incremental changes in power flows resulting from the activation of flexibility bids by applying the provided power transfer distribution factors (PTDFs) in conjunction with network topology information. In some examples, for each market run, the power flow computation does not involve an automatic full power flow analysis but rather a systematic adjustment of the base power flows based on the magnitude and direction of flexibility activation. The resulting computed power flows are then subjected to constraints ensuring that the flows remain within specified physical, contractual, or regulatory limits. These constraints inherently govern the procurement of flexibility bids by implicitly restricting which bids may be selected and in what proportion, ensuring that any flexibility purchasing does not precipitate power flows beyond the safe operating limits of grid components.

By accounting for all important operational parameters within the optimization framework, the model produces solutions that are robust and reliable under real-world operating conditions.

Allowing controlled imbalances enlarges the feasible region of the optimization problem, increasing the likelihood of finding an optimal or near-optimal solution that resolves congestion. This flexibility can lead to more cost-effective solutions by enabling the utilization of a wider range of available flexibility bids, including those that may have been excluded under stricter constraints. Modern grids have a high penetration of DERs, which can introduce variability and uncertainty. The optimization model accounts for this by allowing controlled imbalances. By permitting imbalances within specified limits, the grid can better participate in regional balancing mechanisms, where imbalances can be corrected at a larger, interconnected grid level.

Moreover, by ensuring that power flows remain within physical limits, the risk of cascading failures due to component overloads is minimized. The model enables more effective use of flexibility services offered by various grid participants, such as demand response or distributed generation adjustments.

The primary goal is to minimize the total cost of procuring flexibility bids necessary for congestion management. The model can include penalty terms for any violations of constraints (e.g., slight overloads), incentivizing the solution to adhere strictly to operational limits.

The power flow equations model the physical laws governing the grid. Capacity constraints can set explicit limits for each grid component, reflecting thermal and stability limits. Imbalance constraints, as previously discussed, bound the allowable system imbalance.

Flexibility bid variables are decision variables representing the amounts of upward or downward flexibility to procure from each bid. Imbalance variables represent the net system imbalance resulting from the activation of flexibility bids as well as the original state of system imbalance.

The model can be formulated as a linear programming (LP) or mixed-integer linear programming (MILP) problem, solvable using a computational solver. The inclusion of all relevant constraints ensures that any solution obtained is both feasible (operationally implementable) and optimal with respect to the defined objective function. The optimal solution indicates which flexibility bids to procure and activate to resolve congestion. In some examples, the model can be run in near-real-time, allowing grid operators to respond promptly to evolving grid conditions. The market results can be implemented in real-time. It will be appreciated that the model can also be run some time ahead of real-time (e.g., hours-ahead, day(s)-ahead, or week(s)-ahead), optionally in addition to near real-time.

Optionally, the method further comprises determining power transfer distribution factors (PTDFs) that capture changes in flow over specific grid lines of the electrical power grid as a function of real power injections at various buses in the electrical power grid, wherein the PTDFs are used to represent the power flow constraints in the mathematical optimization model.

The method significantly improves the accuracy and effectiveness of congestion management by integrating power transfer distribution factors (PTDFs) into the mathematical optimization model. PTDFs are sensitivity coefficients that quantify the linearized relationship between changes in power injections at various buses (nodes) in the electrical power grid and the resultant power flows over transmission lines, distribution lines and other key grid components. PTDFs can be used to compute the power flows, which we then add constraints around based on line capacity.

A PTDF for a specific transmission or distribution line with respect to a particular bus represents the proportion of power injected at that bus that will flow through the line. It, thus, indicates how a change in net power injection at one location affects the flow on a transmission, distribution line, or interface component elsewhere in the grid.

The interface components may not be directly part of the PTDF matrices. The collective power offtakes/injections in a grid may be computed and used to then compute the interface flows. Hence, in some implementations, the interface elements do not explicitly appear in the rows of the PTDF matrices.

PTDFs are derived from the network topology and impedances using linear power flow models (e.g., linear or linearized power flow models). They consider the electrical characteristics of the grid, such as line reactances, and the connectivity between nodes. By including PTDFs in the power flow constraints, the optimization model can accurately represent how activating a specific flexibility bid (which changes the power injection at a node) will impact power flows across the entire network.

The constraints ensure that the sum of the base case power flows and the changes due to activated bids remain within the physical capacity limits of all transmission lines, distribution lines, and interface components such as transformers.

The optimization algorithm can use this detailed information to select the optimal set of bids that not only resolve existing congestion but also avoid creating new congestion elsewhere in the grid. Accurate modeling ensures that the solutions are efficient, reducing the need for costly adjustments or interventions after bid activation. Incorporating PTDFs better aligns the optimization model with the actual physical laws governing power flow, leading to solutions that are more robust in real-world operation. By ensuring that power flows remain within physical limits under all considered scenarios, the method contributes to the reliability and stability of the electrical power grid.

In some examples, the incorporation of PTDFs further enables the optimization model to quantitatively assess the incremental congestion relief afforded by the activation of each individual flexibility bid. Specifically, the PTDFs provide a sensitivity measure that indicates the magnitude by which a particular bid's activation will alleviate congestion on targeted grid components, allowing the method to evaluate bids not solely on their resource allocation values but also on their effectiveness in reducing congestion. Consequently, a flexibility bid with a lower cost may be deprioritized if its predicted impact on congestion mitigation is minimal, whereas a bid with a higher cost but substantially greater alleviation potential may be preferentially selected. This dual consideration of both cost and impact overcomes the limitations inherent in conventional merit order methods, which typically clear bids sequentially based on cost rankings, by capturing both the primary and secondary effects of bid activation on network congestion, enhancing overall grid stability and operational efficiency.

In practice, PTDFs can change due to a change in grid operation state or grid topology modifications (e.g., line outages, switch operations). PTDFs may be used as inputs. In some examples, the system operator may update the calculation of the PTDFs and provide new inputs to the optimization tool.

The approach is scalable to large power systems with extensive networks of transmission and distribution lines, making it applicable to modern grids with complex configurations.

Optionally, a total resource allocation value constraint is imposed in the mathematical optimization model to ensure that a total resource allocation value of the set of flexibility bids does not exceed a predefined maximum allowable resource allocation value limit.

The optimization model can seek the most economical combination of flexibility bids that meets the congestion management requirements, the imbalance range requirements, and the bids' technical requirements, while adhering to the cost constraint. Bids with lower associated costs and higher effectiveness in relieving congestion are prioritized, leading to efficient utilization of available resources. The method can align technical goals (resolving congestion and limiting imbalances) with financial objectives (cost efficiency), supporting complete decision-making. The system operator can adjust the maximum allowable cost based on current operational priorities, market conditions, or goals, providing flexibility in response planning.

In some examples, the "resource allocation value" is not limited to a nominal cost per unit of flexibility but rather represents an effective cost metric that encompasses multiple performance criteria. Specifically, the effective cost is determined by evaluating how much each megawatt-hour of flexibility bid reduces power flows on all congested lines, reflecting its true impact on alleviating congestion. This metric further integrates considerations of the bid's influence on other grid elements, while also ensuring compliance with its technical procurement limitations, such as minimum purchase thresholds and divisibility requirements, and its uniform contribution to the system imbalance on a per-megawatt basis. Consequently, the prioritization of flexibility bids can be based on a composite assessment that transcends simple cost comparisons, ensuring that bids are selected based on their operational efficacy. This multi-dimensional evaluation precludes the possibility of manual resolution, necessitating a computational optimization approach to achieve a technically balanced solution.

In times of limited budget, the operator can tighten the cost constraint to prioritize important congestion management actions.

By capping the total expenditure, the operator minimizes the risk of unforeseen high costs due to volatile market prices for flexibility services. Even with financial limitations, the method still computes the best possible solution within the cost constraints, maintaining a level of operational reliability.

The optimization algorithm can consider both the effectiveness of bids in resolving congestion and their associated costs. It aims to find the optimal set of bids that maximizes congestion relief while minimizing the total cost and keeping it within the allowed budget. If the congestion cannot be fully resolved within the cost constraint, the method provides the best possible solution that minimizes congestion as much as possible within the budget. This may involve accepting partial congestion relief or prioritizing important congestion points.

The method can ensure that congestion is managed effectively without unnecessary expenditure, leading to a more reliable and efficient power grid operation.

Optionally, the mathematical optimization model is configured to formulate a mixed-integer linear programming (MILP) problem.

The employed MILP allows for the modeling of logical conditions and dependencies inherent in complex bid structures using integer variables and linear constraints. It effectively incorporates power flow constraints, system imbalance limits, and resource allocation limits within a linear framework.

MILP benefits from algorithms and solver technologies configured to handle large-scale optimization problems with both integer and continuous variables. It enables the method to find optimal or near-optimal solutions within time frames suitable for operational decision-making in power grids. The employed MILP can accommodate fully divisible, indivisible, and partially divisible bids by appropriately defining integer variables and constraints. The method models exclusive and multipart bids through binary variables and linear constraints, ensuring logical consistency in bid selection.

Optionally, the flexibility bids are handled in a market clearing engine.

Market clearing engines are important components of current energy markets. By integrating the method into these engines, the system can utilize the existing technological infrastructure, communication protocols, and data exchange standards.

Market clearing engines are configured to optimally match supply and demand based on bids and offers.

The integration promotes collaboration between different market areas and system operators, leading to more cohesive management of the broader electrical grid network.

According to an aspect, the invention provides for a system for congestion management in an electrical power grid, comprising one or more processing units configured to perform the method according to the disclosure.

The system operationalizes congestion management strategies in actual grid environments. The system enables grid operators to proactively and efficiently address congestion issues. The reliability and stability of the electrical power grid can be enhanced, supporting the changing of the energy landscape at the generation (e.g. integration of renewables, large-scale or distributed energy sources) and consumption levels both at the transmission (e.g., electrification of industries, new loads such as data centers, etc.) as well as the distribution systems (e.g., electrification of mobility, heat, etc.), facilitating the growing electricity demand supporting the growing digital economy and the electrification of energy consumption, and aligning with modern grid management and regional balancing practices.

It will be appreciated that any of the aspects, features and options described in view of the method apply equally to the system and the described server, and non-transitory computer readable medium. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of a process;
Fig. 2 shows a schematic diagram of an example; and
Fig. 3 shows a schematic diagram of an example.

### DETAILED DESCRIPTION

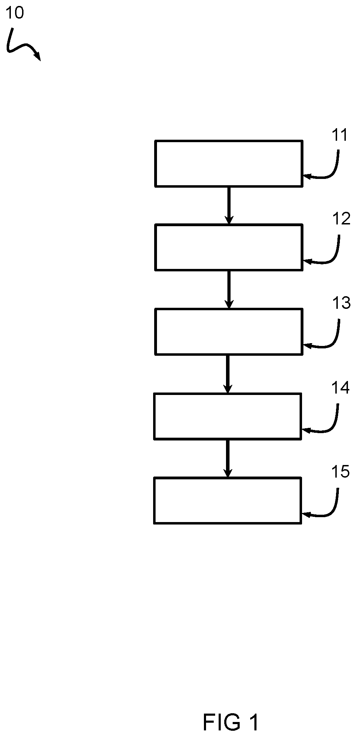

Fig. 1 shows a schematic diagram of a computer-implemented method 10 for congestion management in an electrical power grid. In a first step 11, flexibility bids are received from a plurality of flexibility service providers connected to transmission and/or distribution systems in the electrical power grid, each flexibility bid comprising an offered flexibility quantity and an associated resource allocation value. In a second step 12, a mathematical optimization model is defined to select flexibility bids to resolve congestion in the electrical power grid taking into account resource allocation values associated to the flexibility bids. In a third step 13, imbalance constraints are incorporated into the mathematical optimization model, wherein the imbalance constraints are set to maintain the electrical power grid imbalance within a predetermined range taking into account a current system imbalance state, wherein the imbalance constraints specify minimum and maximum allowable system imbalance values. In a fourth step 14, the mathematical optimization model is solved to obtain an optimal set of flexibility bids to procure to resolve congestion while maintaining the system imbalance within the specified minimum and maximum allowable values. In a fifth step 15, the adjustments are implemented in the power grid based on the obtained optimal set of flexibility bids.

In some examples, each flexibility bid submitted by a flexibility service provider may contain multiple parameters that specify the technical and other details of the underlying resource offering. Such parameters can include, for example, a unique bid identifier (bid ID), system and node identifiers indicating the resource's location in the power grid, the resource's maximum offered flexibility quantity, a corresponding cost, and a directional indicator (e.g., upward or downward flexibility). In addition, each bid may carry a bid type (e.g., "FullyDivisible," "FullyIndivisible," or "PartiallyDivisible") and a service tag designating whether the bid is intended for congestion management (CM), balancing (B), or both (CM+B). These parameters are typically defined and communicated in accordance with an input/output data specification file maintained by the grid operator or market operator.

Where a bid is classified as FullyDivisible, the maximum offered quantity and price information generally suffice to facilitate procurement at any fraction up to that maximum quantity. If the bid is designated as FullyIndivisible, it may only be cleared in one of two states: zero or its entire maximum quantity. For PartiallyDivisible bids, the submitted data also include a minimum procurement threshold below which the bid cannot be purchased, thereby enabling proportional clearance between the minimum threshold and maximum quantity.

Certain bids may belong to complex structures that impose logical constraints on their clearance. In an Exclusive Block Bid set (cf. Exclusive sets), multiple FullyIndivisible bids are grouped such that at most one bid from the set can be cleared. For Multipart bids, a parental relationship is defined, whereby any child bids within that multipart group may only be purchased if the parent bid has been cleared to at least a partial extent. Such complex bid relationships are identified by additional metadata (e.g., multipart set identifiers or parent-child flags) provided within each bid submission. The mathematical optimization model described herein is thus configured to handle both simple and complex bidding scenarios by referencing these various bid parameters and logical interdependencies.

In some examples, the flexibility bids received from the plurality of flexibility service providers include respective service tags indicating whether the bids are intended exclusively for congestion management ("CM"), exclusively for balancing ("B"), or for both congestion management and balancing ("CM+B"). When the optimization engine processes these bids (e.g., as described above in connection with claim 8), the bids tagged as "CM" or "CM+B" are first evaluated and potentially procured to resolve congestion. Any remaining or unallocated portion of bids tagged as CM+B, once the system's congestion management objectives have been met, is then forwarded to a balancing platform according to the bid-forwarding procedure. In particular, these residual quantities undergo a market compatibility check (e.g., MARI_check), which may verify compliance with balancing platform requirements, followed by a grid feasibility check, which ensures that activation of the forwarded bid portion will not induce secondary congestion. If these checks are passed successfully, the remaining flexibility is made available for balancing services. Conversely, bids tagged solely as "B" are not used in the congestion management step. Instead, these bids bypass the congestion-related optimization and proceed directly to the bid-forwarding process, again undergoing the same market compatibility and grid feasibility checks prior to being offered to the balancing platform. This approach ensures that all available flexibility is leveraged in a manner that respects both congestion constraints and system balancing requirements, while preventing any bid activation that could inadvertently introduce new congestion conditions.

In some examples, the power flow constraints incorporated into the mathematical optimization model are derived by formulating the power flow equations for the electrical power grid. These equations represent the relationship between power injections at various buses and the resulting power flows across transmission and distribution lines. The power flow equations provide a fundamental framework for modeling electrical network behavior, enabling a more precise representation of how flexibility bids impact grid operation.

To ensure that the optimization solution respects the physical limits of grid components, feasibility constraints are imposed on the power flows derived from these equations. Specifically, the formulated power flow equations allow the enforcement of line capacity constraints, thereby preventing grid components from being overloaded beyond their rated limits. These constraints ensure that the selected set of flexibility bids does not lead to violations of thermal or stability limits within the grid infrastructure.

In scenarios where strict enforcement of power flow feasibility constraints renders the mathematical optimization model infeasible, a relaxation mechanism may be applied. This relaxation technique permits controlled deviations from the line capacity constraints within predefined tolerances, allowing for an optimization solution that minimizes congestion while ensuring that the system remains operational within acceptable limits. Such an approach enhances the robustness of the congestion management framework by balancing the need for adherence to physical grid constraints with the practical requirement of procuring sufficient flexibility to resolve congestion.

Moreover, in one implementation, power transfer distribution factors (PTDFs) are utilized to linearize the power flow equations, enabling their direct incorporation into the mathematical optimization model. The PTDFs capture the sensitivity of power flows on specific grid lines to changes in real power injections at various buses. By leveraging PTDFs, the model can efficiently enforce feasibility constraints on power flows while maintaining computational tractability, thereby supporting real-time or near-real-time decision-making for congestion management.

### Exemplary process

In an embodiment, the method begins by receiving (e.g., from the system operator or a flexibility service providers) relevant input data and parameters from multiple sources.

These inputs may include for example purchase offers, network data and bid data.

In an exemplary scenario, a selection offer (cf. an input that includes the type of flexibility to be procured, timestamp, imbalance position (e.g. actual, min, and max) and/or total cost cap) is received from entities aiming to procure flexibility, such as transmission system operators (TSOs) and distribution system operators (DSOs). A purchase offer may indicate, inter alia, the type of flexibility service sought, a timestamp or relevant delivery window, the imbalance position to be addressed, and a total cost cap or similar budgetary constraint. In practice, these offers can reflect various time scales, ranging from long-term procurements to near-real-time activations, and can differ in nature (e.g., reserving capacity that may be activated at a later stage versus procuring binding flexibility for immediate delivery).

A plurality of bids are collected from flexibility service providers (FSPs), each bid containing, for example, (i) an offered flexibility quantity (upward or downward), (ii) an associated resource allocation value or cost, (iii) one or more bid divisibility characteristics (fully divisible, indivisible, partially divisible), (iv) location identifiers, (v) service tags (e.g., "CM," "CM+B," or "B") indicating whether the bid is intended solely for congestion management, solely for balancing, or both, and (vi) additional properties such as exclusive set memberships or multipart relationships (i.e., parent-child constraints). These bids can be received in structured digital formats for direct import into the market clearing engine.

Network data are typically provided by system operators responsible for transmission or distribution grids. Such data detail the grid topology, network parameters (e.g., impedances), line capacities, interface/interconnection and transformer ratings, voltage constraints, and other relevant technical attributes. In certain embodiments, this information also includes baseline power flows, relevant security margins, and any contractual or subscription-based flow limitations. These data form the foundation for modeling power flow, calculating permissible operating limits, and identifying congestion locations or expected bottlenecks.

Upon receiving these inputs, a mathematical optimization problem can be formulated designed to identify and select the flexibility resources that resolve or mitigate congestion while respecting operational constraints and budgetary requirements.

In some embodiments, this formulation may comprise at least some of:
- Decision variables and parameters.

A set of decision variables is defined to capture each bid's acceptance status (e.g., zero or one for an indivisible bid) and/or the quantity procured (for a divisible or partially divisible bid). In addition, various parameter values provided by the purchase offer, network data, and bid data are incorporated. For instance, these parameters include line capacities, line impedances, imbalance range limits, and cost coefficients.

### - Net power injection equations

The model may impose nodal balance equations representing net power injection or withdrawal at each bus or network node, taking into account baseline injections and any incremental adjustments due to activated flexibility bids.

### - Power flow calculation equations

Power flows over transmission lines, distribution lines, and other network facilities are commonly represented using linearized network models, often employing Power Transfer Distribution Factors (PTDFs). In such formulations, each bid's activation modifies net power injection at a given node, and the PTDF-based linear equations track how this injection change propagates through the network's branches.

### - Interface flow equations

In certain embodiments, one or more interface elements, such as transformer interfaces between transmission and distribution systems, are similarly modeled to compute resulting interface flows. These flows may be subject to capacity ratings or contractual limits.

### - System imbalance calculations

An imbalance variable is introduced to represent the net difference between total generation and total consumption across a relevant area. The model includes expressions that capture how each activated flexibility bid (upward or downward) alters this system imbalance relative to its nominal or initial state.

### - Line flow constraints with slack variables

To ensure that no branch or transformer is overloaded, the model enforces minimum/maximum power flow limits. Where full feasibility cannot be guaranteed under strict limits, slack variables may be introduced to allow controlled deviations from the constraints. These slack variables are penalized in the objective function, incentivizing the solver to avoid or minimize limit violations.

### - Interface flow constraints with slack variables

Likewise, any interface flows are constrained to remain within specified bounds. As with line flows, slack variables can be used to allow minimal exceedances where absolutely necessary, subject to penalty.

### - System imbalance constraints

The model imposes minimum and maximum allowable imbalance bounds, as set by the system operator, to ensure that the net imbalance remains within a predefined range. For instance, certain implementations may allow no net change to a known initial imbalance (i.e., forcing the imbalance to remain constant), or they may allow some tolerance (e.g., ±X MW) to optimize the use of flexible resources.

### - Total cost cap constraint

If the purchase offer has specified a total cost cap, the optimization constrains the aggregated cost of accepted bids not to exceed this maximum allowable amount. This ensures that the ultimate solution remains within the procuring entity's budget.

### - Bid acceptance constraints

The model accounts for the variety of bid structures. Fully divisible bids can be cleared at any proportion up to their offered quantities. For indivisible bids, the entire quantity of the bid has to be procured if it is to be accepted. For partially divisible bids, a minimum threshold must be met, but any quantity up to the stated maximum is possible. Exclusive set bids further restrict acceptance to at most one bid from a designated group, whereas multipart bids may impose hierarchical relationships (e.g., child bids can only be purchased if the parent bid is accepted).

### - Objective function

A typical objective function includes minimizing the total procurement cost (or resource allocation value) of accepted flexibility bids and penalizing any slack variable usage, so that feasible line flow and interface constraints are enforced as strictly as possible. In some embodiments, the model may also account for reliability metrics or other operator-defined priorities.

Once the optimization model is fully formulated, an appropriate solver or computational engine is selected to process the problem. In various embodiments, a mixed-integer linear programming (MILP) solver or alternative linear programming variants are employed. The solver systematically searches for an optimal, or near-optimal, combination of flexibility bids that:
- Respects the network flow constraints and any interface constraints,
- Maintains or controls the net system imbalance within the user-defined tolerance,
- Satisfies any cost constraints or budgetary caps,
- Complies with the logical relationships and technical requirements of the bids, and
- Minimizes total cost (and any constraint violation penalties).

The solver then outputs a solution set, indicating which bids have been procured and in what quantities, along with any relevant overflow (slack) or imbalance values.

Following solver execution, the method retrieves and processes the resultant decision variable values. This output data may include for example accepted bids, adjusted system imbalance and slack variable usage.

The accepted bids may provide identification of each bid selected for congestion management, including the cleared quantity and associated cost.

The adjusted system imbalance may be the net imbalance after implementing the chosen bids, which must remain within allowable limits.

The slack variable usage may indicate any capacity violations or interface exceedances, if applicable, and the associated penalty costs.

These outputs may be stored locally (e.g., in a database accessible to the system operator) and communicated to relevant stakeholders.

With the final list of procured flexibility bids determined, the system operator (or automated dispatch system) effectuates real-time or near-real-time instructions to the selected flexibility service providers. For instance, each provider may be signaled to either increase or decrease generation or adjust consumption as specified by the accepted bid quantity. By so doing, the operator mitigates congestion in key grid areas while controlling net power imbalances.

Implementation procedures may include secure communication channels, verification of resource availability, and subsequent confirmation that the service provider can deliver the promised flexibility. The system operator may also invoke monitoring functionalities to verify the outcome of the activation process, ensuring that no unanticipated operational issues arise.

In many market designs, certain bids are designated with a service tag "CM+B," meaning they can serve both congestion management (CM) and balancing (B) needs. After the congestion management run, any unpurchased or partially unpurchased portion of such "CM+B" bids (i.e., the residual quantity) can be forwarded for potential balancing market participation. Likewise, those bids tagged solely as "B" (i.e., not considered for congestion management) are also directly considered for forwarding.

Hence, the method can distinguish between different service tags. The tag "CM" may relate to bids used exclusively for congestion management; if not selected, they are not forwarded. The tag "CM+B" may relate to bids first considered for congestion management; any unused portion is subsequently identified and forwarded for possible balancing. The tag "B" may relate to bids that bypass congestion management clearing and proceed directly to balancing processes.

This step effectively preserves the multi-service potential of certain bids and prevents forcing participants to offer distinct volumes for different markets if they prefer a combined approach.

Before the residual bids are fully forwarded to a secondary balancing platform, a filtering or screening process is typically performed. This may include a market compatibility check and a grid feasibility check.

The market compatibility check can ensure that the forwarded bids meet any minimum size thresholds, incremental granularity requirements, or other platform-specific registration rules of the balancing market. Bids failing this check may be pruned to an acceptable granularity or entirely excluded.

The grid feasibility check can verify that the activation of the forwarded bids does not inadvertently cause new local congestion or other network violations. If partial bid quantities can be activated safely, such bids may be pruned accordingly. If no safe activation is possible, the entire bid may be discarded.

By performing these checks, the system ensures that subsequent balancing activations will not compromise the local system integrity or create operational challenges in the originating network segment.

Any bid failing the above checks, whether due to market incompatibility or grid infeasibility, may be removed from further consideration. Conversely, bids that pass are transmitted to the balancing platform or aggregator for potential use in system-wide balancing. This final filtering step ensures that only grid-safe, properly packaged bids enter the balancing market, thus promoting overall network stability and efficient balancing operations at a regional or multi-system level.

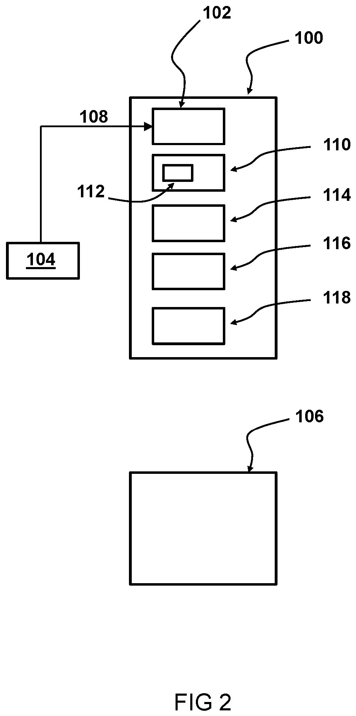

Fig. 2 shows a schematic diagram of a system 100 for congestion management in an electrical power grid 106. The system 100 is configured to optimize the selection and procurement of flexibility bids from various flexibility service providers to resolve congestion issues within the electrical power grid while maintaining system balance and adhering to operational constraints.

The electrical power grid 106 comprises interconnected transmission and distribution systems that facilitate the flow of electrical power from generators to consumers. Within this grid, flexibility service providers 104 are entities capable of adjusting their power generation or consumption in response to external signals. These providers 104 may include, but are not limited to, power generation units, industrial consumers, energy storage systems, and distributed energy resources connected via transmission and/or distribution systems.

The system 100 can have a bid collection module 102. This module 102 is configured to receive flexibility bids 108 from the plurality of flexibility service providers 104. Each flexibility bid 108 includes an offered flexibility quantity, representing the amount of power the provider is willing to adjust, and an associated resource allocation value, such as a value indicative of a cost per unit of flexibility. The flexibility bids can be categorized as upward flexibility bids (indicating a commitment to increase generation or decrease consumption) or downward flexibility bids (indicating a commitment to decrease generation or increase consumption).

Mathematical optimization module 110 is responsible for defining a mathematical optimization model that aims to select an optimal set of flexibility bids to resolve congestion in the electrical power grid 106. This model takes into account the resource allocation values associated with the flexibility bids to ensure cost-effectiveness. The optimization model incorporates various constraints important to grid operations.

One such set of constraints is the imbalance constraints managed by an imbalance constraint module 112. These constraints are integrated into the mathematical optimization model to maintain the electrical power grid's net power imbalance within a predetermined range, taking into account a current system imbalance state, where the range is specified by minimum and maximum allowable system imbalance values. This is important for preserving grid stability and preventing frequency deviations.

Another important component is the power flow constraints, which ensure that power flows over grid components, including transmission lines, distribution lines, and interface components between different grid regions, remain within their physical capacity limits. The optimization model uses these constraints to prevent overloading of grid infrastructure.

The system 100 includes a solver module 114 that processes the mathematical optimization model defined by the mathematical optimization module 110. In this example, the solver employs computational algorithms suitable for solving mixed-integer linear programming (MILP) problems. By solving the optimization model, the solver module 114 determines the optimal set of flexibility bids to procure, balancing the objectives of congestion resolution and cost minimization while adhering to the specified constraints. It will be appreciated that other computational solvers may also be used additionally or alternatively.

Once the optimal set of flexibility bids is identified, an implementation module 116 is configured to translate or facilitate the translation of these decisions into actionable commands. This module may generate adjustment instructions for the flexibility service providers 104, directing them to modify their power generation or consumption as per the procured flexibility bids. These adjustments are then implemented in the electrical power grid 106, effectively mitigating congestion issues.

In scenarios where not all flexibility bids are procured during the optimization process, the system 100 features an optional bid forwarding module 118. This module handles residual flexibility bids, those not selected in the initial optimization, and forwards them to a secondary balancing platform (not shown) for use in providing balancing services. Before forwarding, the bid forwarding module 118 may apply a filtering process to the residual bids to ensure that their activation does not induce further congestion within the grid. This process may involve performing an electrical grid feasibility check and a market compatibility check, to evaluate the impact of the residual bids on grid operations and adjusting or filtering out bids that can cause operational issues.

In some examples, the flexibility service providers 104 may offer bids that are fully divisible, indivisible, or partially divisible. The system may account for these characteristics in the optimization model. Fully divisible bids can be procured in any proportion, indivisible bids can be procured in full or not at all, and partially divisible bids have minimum quantity thresholds.

In some examples, the bid collection module 102 collects bids that may include service tags distinguishing between bids intended for congestion management, balancing services, or both. These tags enable the system to appropriately categorize and utilize bids in the optimization process.

In some examples, the mathematical optimization module 110 is configured to formulate an optimization problem that minimizes the total resource allocation value (e.g., total cost) while satisfying all constraints. It incorporates relational bids such as multipart bids, where a child bid's procurement is contingent on its parent bid, and exclusive set bids, where only one bid from a group can be accepted.

In some examples, the imbalance constraint module 112 ensures that the net system imbalance, represented by imbalance variables in the optimization model, stays within defined limits. Advantageously, the overall stability of the power grid 106 can be better maintained.

In some examples, the solver module 114 can implement various optimization algorithms that are capable of dealing with MILP problems. It navigates the complex solution space considering both continuous variables (e.g., flexibility quantities) and discrete variables (e.g., binary decision variables for bid acceptance).

In some examples, the implementation module 116 is configured to interface with control systems and market platforms to execute the procured flexibility bids. It ensures that the adjustment signals are accurately communicated to the flexibility service providers 104 for e.g. real-time or near-real-time grid management.

The bid forwarding module 118 and the secondary balancing platform (not shown) can extend the utility of the flexibility bids beyond congestion management by contributing to grid balancing services. The filtering process ensures that only bids that are safe and effective for balancing purposes are forwarded.

Flexibility service providers 104 can submit their flexibility bids 108 through the bid collection module 102. In some examples, these bids include detailed information such as the quantity of flexibility offered, resource allocation value, service tags, and any relational bid information. The mathematical optimization module 110 constructs an optimization model that integrates all submitted bids, constraints, and objectives. The model may incorporate power flow constraints that utilize Power Transfer Distribution Factors (PTDFs) to model how changes in injections at different buses affect line flows, ensuring that line capacities are not exceeded; imbalance constraints that maintain net system imbalance; and congestion constraints that address specific congested elements in the grid by controlling injections and withdrawals at locations; and a resource allocation value constraints that prevents the total cost of procured bids from exceeding budgetary limits. The solver module 114 processes the optimization model to identify the optimal set of bids that resolve congestion while minimizing costs and adhering to all constraints. The implementation module 116 disseminates dispatch instructions to the corresponding flexibility service providers 104. These instructions specify the required adjustments in generation or consumption as per the accepted bids. Unselected bids can be evaluated by the bid forwarding module 118. Through the filtering process, it ensures that only suitable bids are sent to the secondary balancing platform for potential use in balancing services. The electrical power grid 106 undergoes the necessary adjustments based on the implemented bids, effectively resolving congestion and maintaining system balance.

The system 100 is capable of handling complex bid structures and constraints inherent in modern power systems with high penetration of distributed energy resources. In some examples, MILP is used. The system 100 leverages detailed grid models, including PTDFs, to accurately reflect the physical realities of power flow and congestion.

While not explicitly shown in Fig. 2, system 100 may be implemented using a (distributed) computing architecture, with optionally one or more modules communicating over secure networks. The processing units executing these modules can include high-performance servers with computational optimization solvers.

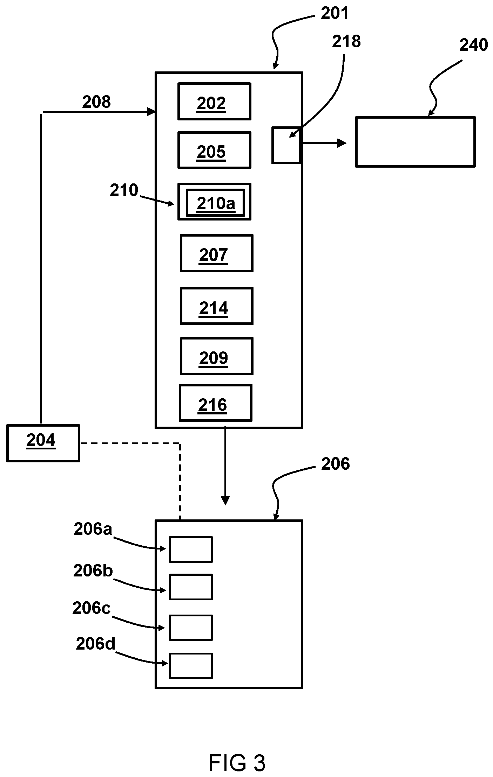

Fig. 3 depicts a schematic of a system 201 for congestion management in an electrical power grid 206. A Central Control System (CCS) 201 may orchestrate at least partially the congestion management process. The CCS 201 is connected to various Flexibility Service Providers (FSPs) 204, the Electrical Power Grid 206, and external platforms such as the Secondary Balancing Platform 240. Flexibility Service Providers 204 are entities capable of adjusting their power generation or consumption in the power grid 206 in response to signals from the CCS 201. They may include for example generation units 206a, such as power plants that can ramp up or down their output; industrial consumers 206b, such as large-scale consumers that can modify their demand; distributed energy resources (DERs) 206c, such as small-scale generators like solar panels and wind turbines; and/or energy storage systems 206d, such as batteries and other storage devices that can absorb or supply power.

Each FSP can submit Flexibility Bids 208 to the CCS 201, containing details such as offered flexibility quantity, such as the amount of power adjustment available; resource allocation value, such as the cost associated with providing the flexibility; bid direction, such as upward (increase generation/decrease consumption) or downward (decrease generation/increase consumption); bid type and divisibility attributes, such as indicating whether bids are fully divisible, indivisible, or partially divisible; service tags, such as specifying the intended service (e.g., congestion management, balancing, or both); and/or relational bid information, such as details on multipart bids and exclusive set bids.

The CCS 201 comprises several interconnected modules. It may include a bid collection module 202 that receives and aggregates flexibility bids from FSPs via secure communication channels, validates bid data for completeness and compliance with market rules, and categorizes bids based on service tags and other attributes.

The CSS 201 may further include a system data acquisition module 205 that gathers real-time data from the electrical power grid, including grid topology information, such as configuration of transmission and distribution lines, buses, and transformers; operational limits such as thermal limits of lines, voltage limits at buses, and interface capacities; and/or current operating conditions such as measurements of power flows, and system imbalance. In some examples, network data is provided by the system operators, similarly to how the FSPs submit their flexibility bids.

The CSS 201 may further include a mathematical optimization module 210 that defines a mathematical optimization model 210a to select flexibility bids optimally. It can incorporate various constraints and objectives, including power flow constraints, ensuring power flows do not exceed component capacities; imbalance constraints, keeping system imbalance within specified minimum and maximum values; and bid constraints, accounting for bid divisibility, relational bids, and service tags. It can also include resource allocation value constraints ensuring total cost does not exceed budget limits. Power Transfer Distribution Factors (PTDFs) can be utilized to model the impact of injections and withdrawals on line flows. The problem may be formulated as a Mixed-Integer Linear Programming (MILP) model. However, other computational solving arrangements may also be employed.

The CSS 201 may further include a constraint handling module 207 that detects infeasibilities in the optimization model due to tight constraints. It may implement constraint relaxation techniques. For instance, soft constraints may be employed that allow certain constraints to be violated within predefined tolerances. Additionally or alternatively, penalty variables may be utilized that introduce variables to quantify constraint violations, penalized in the objective function. Constraints may be prioritized based on their criticality to system reliability.

In some examples, the constraint handling module 207 is part of the mathematical optimization module 210.

The CSS 201 may further include an optimization solver module 214 that executes the optimization algorithm to solve a MILP problem. It may operate on high-performance computing infrastructure to handle large-scale models. Solution outputs may be provided, including bid acceptance decisions and adjusted power flows.

The CSS 201 may further include a results processing module 209 that analyzes optimization outcomes to generate actionable insights, extracts the optimal set of flexibility bids to procure, and calculates expected changes in power flows and system imbalance.

The CSS 201 may further include an implementation module 216 that converts optimization results into dispatch instructions for FSPs, sends adjustment commands to FSPs, specifying the amount and timing of power adjustments. In some examples, the system operator may monitor FSP compliance and performance (e.g. in real-time or near-real-time).

An optional residual bid handling module 218 may be provided in the CSS 201, This module may manage residual flexibility bids not procured in the initial optimization. It can apply a filtering process to assess the suitability of residual bids for balancing services. In some examples, an electrical grid feasibility check is performed in which potential congestion issues from activating residual bids are evaluated. In some examples, bid adjustments are performed, for example including pruning bid quantities and/or excluding bids. In some examples, minimum size and granularity adjustments are performed including modifying bids to meet secondary platform 240 requirements.

The bid handling module 218 may forward filtered bids to the secondary balancing platform 240 for potential activation. The secondary balancing platform may have an interface that facilitates communication and data exchange with the secondary balancing platform, and ensures compliance with market protocols and timing for balancing services.

In some examples, a data storage and logging module is provided that maintains records of bids, grid data, optimization results, and dispatch actions. This can support auditing, reporting, and further analysis.

In some examples, an Application Programming Interface (API) communication arrangements are provided.

In some examples, a databased for processing/storing data can be provided (not shown).

A User Interface (UI) and Monitoring Dashboard may also be employed that provides system operators with real-time visualization of grid conditions, bid statuses, and optimization results, that enables manual interventions and overrides when necessary and that displays alerts and notifications for significant events or anomalies.

The model can explicitly incorporate imbalance constraints into the optimization formulation. These constraints effectively allow to maintain the stability and reliability of the power grid by ensuring the net system imbalance stays within acceptable bounds. In some examples, a minimum allowable system imbalance is provided, cf. the lower limit of net power injection imbalance that the system can tolerate; and a maximum allowable system imbalance, cf. the upper limit of net power injection imbalance that the system can tolerate. These constraints may be influenced by grid operator requirements and technical limitations of the grid infrastructure.

The system may assess the feasibility of the mathematical optimization model with the current set of constraints and bids. This involves attempting to solve the MILP problem using optimization solvers. If a feasible solution exists that satisfies all constraints, the process can proceed to the next step. If no feasible solution is found due to conflicting constraints (e.g., congestion cannot be resolved without violating imbalance constraints), the process may implement constraint relaxation. In this step, the system addresses the infeasibility identified by implementing a relaxation technique on the congestion constraints. The relaxation may involve allowing controlled deviations, i.e. permitting certain constraints to be temporarily violated to find a viable solution, employing penalty functions that introduce penalty terms into the objective function that quantify the cost of violating constraints, thereby encouraging the optimizer to minimize deviations; and/or adjusting the optimization model by updating the mathematical model to reflect the relaxed constraints and penalties. The relaxation aims to find the best possible solution under the circumstances, minimizing the extent of congestion while accepting limited constraint deviations.

The system may solve the mathematical optimization model (whether original or adjusted) to obtain the optimal set of flexibility bids to procure. The optimization process may select bids. This may include identifying which bids to accept based on their contribution to i.a. congestion resolution, and compliance with other constraints. Accepted bid quantities may then be determined. For all types of bids, the optimal quantity of flexibility to procure from each bid can be calculated. The system may be configured to ensure compliance, i.e. to guarantee that the selected bids collectively resolve congestion and maintain system imbalance within allowable limits.

The system may implement the adjustments in the power grid based on the optimal set of flexibility bids obtained from the optimization. In some examples, this involves dispatching instructions by sending (control) signals or activation instructions to the selected flexibility service providers. Grid conditions may be monitored to verify that congestion is alleviated, and system imbalance is maintained within predefined limits.

It will be appreciated that the method described herein can be integrated into the core functionality of a market clearing engine tool and can be implemented within a flexibility market platform. The market clearing engine is responsible for processing flexibility bids submitted by flexibility service providers, selecting an optimal subset of bids to resolve congestion while adhering to operational constraints of the electrical power grid, and ensuring that system imbalance remains within permissible limits.

The market clearing engine performs optimization computations that incorporate various bid attributes, including offered flexibility quantities, resource allocation values, divisibility characteristics, service tags, and relational dependencies among bids. It ensures that selected bids contribute to congestion alleviation while maintaining power flow constraints, system stability, and efficiency. In particular, the mathematical optimization model formulated within the market clearing engine accounts for power flow constraints, imbalance constraints, and total resource allocation limits, ensuring a feasible and cost-effective procurement of flexibility resources.

Additionally, the market clearing engine can handle residual flexibility bids that are not procured in the congestion management process by applying a filtering mechanism before forwarding them to a secondary balancing platform. This filtering ensures that residual bids meet operational requirements and do not introduce further congestion within the electrical power grid.

By embedding the congestion management method within a market clearing engine, the overall efficiency of grid operation is enhanced, providing a systematic and automated approach to flexibility procurement and congestion resolution. The integration allows for a seamless interaction between congestion management and other market operations, facilitating a coordinated approach to balancing and congestion mitigation in interconnected power networks.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description, features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A computer-implemented method for congestion management in an electrical power grid, the method comprising:
receiving flexibility bids from a plurality of flexibility service providers connected to transmission and/or distribution systems in the electrical power grid, each flexibility bid comprising an offered flexibility quantity and an associated resource allocation value;
defining a mathematical optimization model to select flexibility bids to resolve congestion in the electrical power grid taking into account resource allocation values associated to the flexibility bids;
incorporating imbalance constraints into the mathematical optimization model, wherein the imbalance constraints are set to maintain the electrical power grid imbalance within a predetermined range taking into account a current system imbalance state, wherein the imbalance constraints specify minimum and maximum allowable system imbalance values;
solving the mathematical optimization model to obtain an optimal set of flexibility bids to procure to resolve congestion while maintaining the system imbalance within the specified minimum and maximum allowable values; and implementing the adjustments in the power grid based on the obtained optimal set of flexibility bids.

2. The method according to claim 1, wherein the flexibility bids comprise upward flexibility bids and downward flexibility bids; wherein the upward flexibility bids indicate a commitment to increase electrical power generation or to decrease electrical power consumption; and wherein the downward flexibility bids indicate a commitment to decrease electrical power generation or to increase electrical power consumption.

3. The method according to claim 1 or 2, including, after determining the solution to the mathematical optimization model and identifying the optimal subset of flexibility bids for acquisition, forwarding any residual flexibility bids not procured to a secondary balancing platform for utilization in providing balancing services; wherein said forwarding comprises the step of applying a filtering process to the residual flexibility bids, the filtering process configured to ensure that activation of said bids does not precipitate further congestion within the electrical power grid network to which the flexibility resources are connected.

4. The method according to claim 3, wherein the filtering of the flexibility bids comprises:
performing an electrical grid feasibility check to determine whether activation of forwarded residual flexibility bids would be within operational limits of the electrical power grid to which the flexibility resources are connected; and
adjusting the flexibility bids by pruning bid quantities that would cause congestion, or by deleting bids whose activation would precipitate further congestion.

5. The method according to claim 3 or 4, wherein the filtering of the flexibility bids comprises adjusting unused flexibility bids to meet minimum size and granularity requirements of the secondary balancing platform.

6. The method according to any one of the preceding claims, comprising:
assessing whether a mathematical optimization model is infeasible due to one or more congestion constraints;
upon determining the infeasibility of the mathematical optimization model due to said congestion constraints, implementing a relaxation technique on the congestion constraints to minimize congestion while permitting deviations within predefined ranges, wherein the relaxation technique includes
adjusting the mathematical optimization model to minimize congestion in the system modeled by the mathematical optimization model while accommodating the allowed deviations.

7. The method according to any one of the preceding claims, wherein the mathematical optimization model incorporates flexibility bids that are classified into at least one of the following categories: fully divisible, indivisible, and partially divisible bids, and wherein the optimization selectively procures portions of these bids based on their divisibility characteristics.

8. The method according to any one of the preceding claims, wherein the collected flexibility bids include service tags that distinguish bids intended solely for congestion management from those intended for balancing or both congestion management and balancing, and wherein the mathematical optimization model is configured to select bids based on said service tags.

9. The method according to any one of the preceding claims, wherein the mathematical optimization model is adapted to handle relational bids including multipart bids where purchasing a child bid is contingent upon the procurement of its corresponding parent bid, and exclusive set bids where only one bid from a set can be procured.

10. The method according to any one of the preceding claims, wherein the mathematical optimization model includes at least: power flow constraints that ensure power flows over grid components including interface components between power grids remain within their physical capacity limits; imbalance variables representing the system imbalance in net power injection; and imbalance constraints that limit the system imbalance to within specified minimum and maximum allowable values.

11. The method according to claim 10, further comprising determining power transfer distribution factors (PTDFs) that capture changes in flow over specific grid lines of the electrical power grid as a function of real power injections at various buses in the electrical power grid, wherein the PTDFs are used to represent the power flow constraints in the mathematical optimization model.

12. The method according to any one of the preceding claims, wherein a total resource allocation value constraint is imposed in the mathematical optimization model to ensure that a total resource allocation value of the set of flexibility bids does not exceed a predefined maximum allowable resource allocation value limit.

13. The method according to any one of the preceding claims, wherein the mathematical optimization model is configured to formulate a mixed-integer linear programming (MILP) problem.

14. The computer-implemented method according to any one of the preceding claims, wherein the flexibility bids are handled in a market clearing engine.

15. A system for congestion management in an electrical power grid, comprising one or more processing units configured to perform the method of any one of claims 1 to 13.
